# EUROPEAN PATENT APPLICATION

(11) **EP 4 730 861 A1**
(43) Date of publication of application: **22.04.2026**
(21) Application number: 24822686.2
(22) Date of filing: 11.06.2024
(51) Int. Cl.: H04W 28/02

(54) **INFORMATION INTERACTION METHOD AND APPARATUS, AND TERMINAL AND NETWORK-SIDE DEVICE**

(30) Priority: 15.06.2023 CN 202310716455
(71) Applicant: Vivo Mobile Communication Co., Ltd., Dongguan, Guangdong 523863 (CN)
(72) Inventor: WANG, Hui, Dongguan, Guangdong 523863 (CN); KANG, Yanchao, Dongguan, Guangdong 523863 (CN)
(74) Representative: Walaski, Jan Filip
(86) International application number: PCT/CN2024/098472
(87) International publication number: WO 2024/255736

(57) **Abstract**

The present application belongs to the technical field of communications. Disclosed are an information interaction method and apparatus, and a terminal and a network-side device. The information interaction method in the embodiments of the present application comprises: when a first timer is running and a target event associated with a terminal is to be triggered, the terminal executing at least one of the following operations: sending a request message to a network-side device, wherein the request message is used for indicating that the terminal is to activate an unavailability time; and storing context information, wherein the terminal is unavailable during the process of the target event being executed, and the first timer is a timer related to congestion control.

## Description

### CROSS-REFERENCE TO RELATED APPLICATIONS

This application claims priority to Chinese Patent Application No. 202310716455.2, filed in China on June 15, 2023, which is incorporated herein by reference in its entirety.

### TECHNICAL FIELD

This application pertains to the field of communication technologies, and specifically relates to an information exchange method and apparatus, a terminal, and a network-side device.

### BACKGROUND

When a terminal is ready to execute an event that makes the terminal unavailable, if the terminal can store a context, the terminal may initiate a mobility registration update procedure to activate an unavailability period, or if the terminal cannot store a context, the terminal may initiate a deregistration procedure to activate an unavailability period.

However, if general NAS level congestion control is active in this case, that is, if T3346 is running, the terminal that can store the context cannot initiate the mobility registration update procedure to activate the unavailability period, resulting in deferred resumption of a normal service of the terminal after an unavailability period duration of the terminal ends, and affecting user experience.

### SUMMARY

Embodiments of this application provide an information exchange method and apparatus, a terminal, and a network-side device, to resolve a problem of how to quickly resume a normal service of a terminal.

According to a first aspect, an information exchange method is provided. The method is performed by a terminal and includes:
in a case that a first timer is running, when a target event associated with the terminal is to be triggered, performing, by the terminal, at least one of the following operations:
sending a request message to a network-side device, where the request message is used to indicate that the terminal is to activate an unavailability period; and
storing context information, where
the terminal is unavailable during execution of the target event, and the first timer is a timer related to congestion control.

According to a second aspect, an information exchange method is provided. The method is performed by a network-side device and includes:
in a case that the network-side device performs congestion control, receiving, by the network-side device, a request message from a terminal, where
the request message is used to indicate that an unavailability period of the terminal is to be activated during execution of a target event associated with the terminal.

According to a third aspect, an information exchange apparatus is provided and includes:
an execution module, configured to perform at least one of the following operations when a target event associated with a terminal is to be triggered in a case that a first timer is running:
sending a request message to a network-side device, where the request message is used to indicate that the terminal is to activate an unavailability period; and
storing context information, where
the terminal is unavailable during execution of the target event, and the first timer is a timer related to congestion control.

According to a fourth aspect, an information exchange apparatus is provided and includes:
a first receiving module, configured to receive a request message from a terminal in a case that a network-side device performs congestion control, where
the request message is used to indicate that an unavailability period of the terminal is to be activated during execution of a target event associated with the terminal.

According to a fifth aspect, a terminal is provided. The terminal includes a processor and a memory. The memory stores a program or instructions capable of running on the processor. When the program or instructions are executed by the processor, the steps of the method according to the first aspect are implemented.

According to a sixth aspect, a terminal is provided and includes a processor and a communication interface. The processor is configured to store context information when a target event associated with the terminal is to be triggered in a case that a first timer is running. The communication interface is configured to send a request message to a network-side device when the target event associated with the terminal is to be triggered in a case that the network-side device performs congestion control, where the request message is used to indicate that the terminal is to activate an unavailability period, the terminal is unavailable during execution of the target event, and the first timer is a timer related to congestion control.

According to a seventh aspect, a network-side device is provided. The network-side device includes a processor and a memory. The memory stores a program or instructions capable of running on the processor. When the program or instructions are executed by the processor, the steps of the method according to the first aspect are implemented.

According to an eighth aspect, a network-side device is provided and includes a processor and a communication interface. The communication interface is configured to receive a request message from a terminal in a case that the network-side device performs congestion control, where the request message is used to indicate that an unavailability period of the terminal is to be activated during execution of a target event associated with the terminal.

According to a ninth aspect, a readable storage medium is provided. The readable storage medium stores a program or instructions. When the program or instructions are executed by a processor, the steps of the method according to the first aspect are implemented, or the steps of the method according to the second aspect are implemented.

According to a tenth aspect, a wireless communication system is provided and includes a terminal and a network-side device. The terminal may be configured to perform the steps of the method according to the first aspect. The network-side device may be configured to perform the steps of the method according to the second aspect.

According to an eleventh aspect, a chip is provided. The chip includes a processor and a communication interface. The communication interface is coupled to the processor. The processor is configured to run a program or instructions to implement the method according to the first aspect or implement the method according to the second aspect.

According to a twelfth aspect, a computer program or program product is provided. The computer program or program product is stored in a storage medium. The program or program product is executed by at least one processor to implement the steps of the information exchange method according to the first aspect or implement the steps of the information exchange method according to the second aspect.

In the embodiments of this application, in the case that the first timer related to congestion control is running, when the target event associated with the terminal is to be triggered, the terminal sends, to the network-side device, the request message used to indicate that the terminal is to activate the unavailability period, so that the terminal can successfully activate the unavailability period and that the terminal can store the context information in an unavailability period duration. Alternatively, in the case that the network-side device performs congestion control, when the target event associated with the terminal is to be triggered, the terminal directly stores the context information, so that the terminal can reuse the context information after an unavailability period duration ends and can quickly resume a normal service based on the context information, thereby improving user experience.

### BRIEF DESCRIPTION OF DRAWINGS

FIG. 1 is a block diagram of a wireless communication system to which an embodiment of this application may be applied;
FIG. 2 is a first schematic flowchart of an information exchange method according to an embodiment of this application;
FIG. 3 is a second schematic flowchart of an information exchange method according to an embodiment of this application;
FIG. 4 is a first schematic signaling interaction diagram of an information exchange method according to an embodiment of this application;
FIG. 5 is a second schematic signaling interaction diagram of an information exchange method according to an embodiment of this application;
FIG. 6 is a third schematic signaling interaction diagram of an information exchange method according to an embodiment of this application;
FIG. 7 is a fourth schematic signaling interaction diagram of an information exchange method according to an embodiment of this application;
FIG. 8 is a first schematic diagram of a structure of an information exchange apparatus according to an embodiment of this application;
FIG. 9 is a second schematic diagram of a structure of an information exchange apparatus according to an embodiment of this application;
FIG. 10 is a schematic diagram of a structure of a communication device according to an embodiment of this application;
FIG. 11 is a schematic diagram of a hardware structure of a terminal according to an embodiment of this application;
FIG. 12 is a first schematic diagram of a structure of a network-side device according to an embodiment of this application; and
FIG. 13 is a second schematic diagram of a structure of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this application are used to distinguish between similar objects instead of describing a specified order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "or" in this application indicates at least one of connected objects. For example, "A or B" covers three schemes, that is, scheme 1: including A and excluding B; scheme 2: including B and excluding A; and scheme 3: including both A and B. The character "/" generally indicates an "or" relationship between associated objects.

The term "indication" in this application may be either a direct indication (or an explicit indication) or an indirect indication (or an implicit indication). The direct indication may be understood as follows: A sender explicitly notifies a receiver, in a sent indication, of content such as specific information, an operation to be performed, or a result being requested. The indirect indication may be understood as follows: A receiver determines corresponding information based on an indication sent by a sender, or makes a decision and determines, based on a decision result, an operation to be performed or a result being requested, or the like.

It should be noted that technologies described in the embodiments of this application are not limited to a long term evolution (Long Term Evolution, LTE)/LTE-Advanced (LTE-Advanced, LTE-A) system, and can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), or other systems. The terms "system" and "network" in the embodiments of this application are usually used interchangeably. The described technologies may be used for the foregoing systems and radio technologies, and may also be used for other systems and radio technologies. However, in the following descriptions, a new radio (New Radio, NR) system is described for an illustrative purpose, and NR terms are used in most of the following descriptions. These technologies may also be applied to other systems than the NR system, for example, a 6th Generation (6^{th} Generation, 6G) communication system.

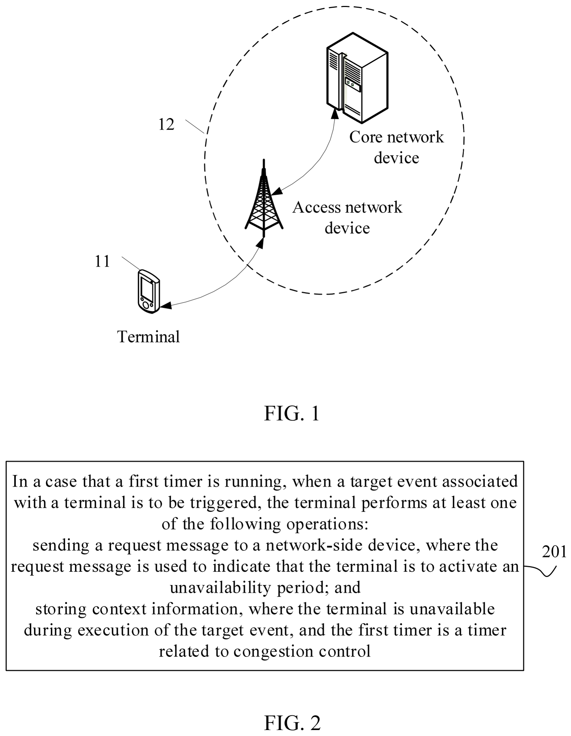

FIG. 1 is a block diagram of a wireless communication system to which an embodiment of this application may be applied. The wireless communication system includes a terminal 11 and a network-side device 12. The terminal 11 may be a terminal-side device such as a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile Internet device (Mobile Internet Device, MID), an augmented reality (Augmented Reality, AR) or virtual reality (Virtual Reality, VR) device, a robot, a wearable device (Wearable Device), a flight vehicle (flight vehicle), vehicle user equipment (Vehicle User Equipment, VUE), shipborne equipment, pedestrian user equipment (Pedestrian User Equipment, PUE), a smart home (a home device having a wireless communication function, such as a refrigerator, a television, a washing machine, or furniture), a game console, a personal computer (Personal Computer, PC), a teller machine, or a self-service machine. The wearable device includes a smartwatch, a smart band, a smart headphone, smart glasses, smart jewelry (a smart bracelet, a smart wrist chain, a smart ring, a smart necklace, a smart anklet, a smart ankle chain, or the like), a smart wristband, smart clothing, or the like. The vehicle user equipment may also be referred to as a vehicle-mounted terminal, a vehicle-mounted controller, a vehicle-mounted module, a vehicle-mounted component, a vehicle-mounted chip, a vehicle-mounted unit, or the like. It should be noted that a specific type of the terminal 11 is not limited in the embodiments of this application. The network-side device 12 may include an access network device or a core network device. The access network device may also be referred to as a radio access network (Radio Access Network, RAN) device, a radio access network function, or a radio access network element. The access network device may include a base station, a wireless local area network (Wireless Local Area Network, WLAN) access point (Access Point, AP), a wireless fidelity (Wireless Fidelity, Wi-Fi) node, or the like. The base station may be referred to as a NodeB (NodeB, NB), an evolved NodeB (Evolved NodeB, eNB), a next generation NodeB (next generation NodeB, gNB), a new radio NodeB (New Radio NodeB, NR NodeB), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home NodeB (home NodeB, HNB), a home evolved NodeB (home evolved NodeB), a transmission reception point (Transmission Reception Point, TRP), or another appropriate term in the art. As long as the same technical effect is achieved, the base station is not limited to specific technical terms. It should be noted that in the embodiments of this application, only a base station in an NR system is used as an example, but a specific type of the base station is not limited.

The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), or the like. It should be noted that in the embodiments of this application, only a core network device in the NR system is used as an example for description, but a specific type of the core network device is not limited.

To facilitate a clearer understanding of the technical solutions provided in the embodiments of this application, the following first describes some related knowledge.

### 1. Seamless UE context recovery (Seamless UE context recovery, SUECR)

Triggering of some internal events in a terminal, such as upgrade of an operating system or device restart, may cause unavailability of the terminal such as user equipment (User Equipment, UE) in a period of time. In this case, the terminal may store its context (including a mobility management and session management context) in a universal subscriber identity module (Universal Subscriber Identity Module, USIM) or a nonvolatile memory, so that the terminal can reuse the context after an unavailability period duration ends, and can quickly interact with a fifth generation mobile communication technology core (5^{th} Generation Mobile Communication Technology Core, 5GC) network to resume a normal service. In addition, the terminal interacts with the network to notify the network of the unavailability period duration, so that the network can determine a status of the terminal and avoid operations such as paging when the terminal is unavailable.

Before the foregoing event starts, if the terminal can store the context, the terminal may indicate the unavailability period duration to the network by initiating a mobility registration update procedure. In this case, the network considers that the terminal is unreachable until the unavailability period duration ends or the terminal enters a connected state. In addition, if the terminal cannot store the context, the terminal may indicate the unavailability period duration to the network by initiating a deregistration procedure.

### 2. Congestion control mechanism

The network may detect NAS signaling congestion and perform congestion control. When congestion control is active, the network rejects the NAS signaling request and provides a T3346 value. To avoid synchronous timeouts of timers, where a large number of terminals initiate deferred NAS signaling requests simultaneously, the network should select different T3346 values for the terminals. When a terminal enables a received T3346 value, during running of T3346, the terminal is not allowed to initiate any NAS signaling (including an initial registration request, a mobility registration update request, and a service request) related to applied congestion control, with some exceptions, for example, when the terminal receives a paging request from the network, or when the terminal initiates signaling for an emergency service or high-priority access.

When the terminal is ready to execute an event that makes the terminal unavailable, if the terminal can store a context, the terminal may initiate a mobility registration update to exchange a status and an unavailability period duration with the network. However, if T3346 is running in this case, the terminal is not allowed to initiate the mobility registration update procedure, and the terminal cannot activate an unavailability period. In the unavailability period duration of the terminal, the terminal cannot use the feature of SUECR, that is, the terminal cannot store the context of the terminal, resulting in deferred resumption of a normal service of the terminal. In addition, the network cannot determine the status of the terminal, and may perform unnecessary operations such as paging.

Therefore, in view of the foregoing problems, the embodiments of this application provide an information exchange method and apparatus, a terminal, and a network-side device.

An information exchange method provided in the embodiments of this application is hereinafter described in detail by using some embodiments and application scenarios thereof with reference to the accompanying drawings.

FIG. 2 is a first schematic flowchart of an information exchange method according to an embodiment of this application. As shown in FIG. 2, the method includes step 201.

Step 201: In a case that a first timer is running, when a target event associated with a terminal is to be triggered, the terminal performs at least one of the following operations:
sending a request message to a network-side device, where the request message is used to indicate that the terminal is to activate an unavailability period; and
storing context information, where the terminal is unavailable during execution of the target event, and the first timer is a timer related to congestion control.

It should be noted that the first timer may be a timer T3346. This embodiment of this application may be applied to a scenario of NAS-level congestion control (that is, the timer T3346 is running, hereinafter referred to as T3346 being running). The terminal includes but is not limited to the foregoing illustrated type of the terminal 11. This is not limited in this application.

A scenario in which T3346 is running includes at least one of the following:
Scenario 1: A mobility registration update request message sent by the terminal to the network-side device is rejected, where the mobility registration update request message is used to indicate that the terminal is to activate the unavailability period; and the terminal wants to activate the unavailability period again.
Scenario 2: A registration request message sent by the terminal to the network-side device is rejected, where the registration request is not used to indicate that the terminal is to activate the unavailability period. In this case, an upper layer of the terminal requests to activate the unavailability period.

In this embodiment of this application, in a case that the network-side device performs congestion control, when the target event associated with the terminal is to be triggered, the terminal may perform at least one of the following operations:
Operation 1: The terminal sends, to the network-side device, the request message used to indicate that the terminal is to activate the unavailability period.

Correspondingly, after receiving the request message from the terminal, the network-side device may determine that the terminal is in an unavailable state.

Operation 2: The terminal stores the context information.

In an implementation, the request message is used to request activation of the unavailability period, and the network-side device may agree to or reject the request of the terminal for requesting to activate the unavailability period.

In an implementation, the request message is used to indicate that the terminal is unavailable.

In an implementation, activation of the unavailability period may be understood as "the terminal is unavailable in an unavailability period duration".

Optionally, the context information includes at least one of the following:
(a) 5G mobility management context information; and
(b) 5G session management context information.

Optionally, a storage location of the context information includes at least one of the following:
(a) a USIM of the terminal; and
(b) a nonvolatile memory of the terminal.

In this embodiment of this application, in the case that the first timer related to congestion control is running, when the target event associated with the terminal is to be triggered, the terminal sends, to the network-side device, the request message used to indicate that the terminal is to activate the unavailability period, so that the terminal can successfully activate the unavailability period and that the terminal can store the context information in the unavailability period duration. Alternatively, in the case that the network-side device performs congestion control, when the target event associated with the terminal is to be triggered, the terminal directly stores the context information, so that the terminal can reuse the context information after the unavailability period duration ends and can quickly resume a normal service based on the context information, thereby improving user experience.

Optionally, the request message includes at least one of the following:
(a) A mobility registration update request message, where the mobility registration update request message includes an unavailability period duration of the terminal.

Specifically, during running of T3346, when the target event associated with the terminal is to be triggered, the terminal is allowed to send the mobility registration update request message, where the mobility registration update request message is used to activate the unavailability period, and the mobility registration update request message includes the unavailability period duration.

Optionally, in a case that the request message includes the mobility registration update request message, the terminal can store the context information.

In other words, the terminal can store the 5G mobility management context information and the 5G session management context information.

Optionally, in a case that the terminal sends the mobility registration update request message to the network-side device, the terminal stores the context information.

In other words, the terminal may store the 5G mobility management context information and the 5G session management context information into the USIM or the nonvolatile memory of the terminal. By performing the foregoing method, the terminal can reuse the context information after the unavailability period duration ends and can quickly resume the normal service based on the context information, thereby improving user experience.

Optionally, before the terminal sends the mobility registration update request message to the network-side device, the network-side device needs to indicate support for the unavailability period to the terminal in a previous registration procedure.

Correspondingly, the terminal receives second indication information from the network-side device, where the second indication information is used to indicate that the network-side device supports the unavailability period.

It should be noted that, in a case that the terminal receives the second indication information from the network-side device, it indicates that the network-side device has a capability of supporting the unavailability period. In a case that both the terminal and the network-side device support the unavailability period, the terminal can activate the unavailability period only when the target event associated with the terminal is to be triggered. Correspondingly, the network-side device can avoid operations such as paging in the unavailability period duration.

The terminal should include information indicating the unavailability period duration of the terminal into the registration request message. For example, the information of the unavailability period duration of the terminal may be indicated by using an "unavailability period duration information element", and a follow-on request indication is set to "No follow-on request pending".

In addition, even if the terminal has one or more active always-on protocol data unit (Protocol Data Unit, PDU) sessions related to 3rd Generation Partnership Project (3rd Generation Partnership Project, 3GPP) access, an uplink data status (Uplink data status) information element (Information Element, IE) or an allowed PDU session status (the Allowed PDU session status) IE cannot be included in the registration request message.

It should be noted that if the terminal provides the unavailability period duration, the network-side device should consider that the terminal is unreachable until the terminal resumes the normal service or enters a connected state. In this case, the network-side device needs to store the received unavailability period duration and release a NAS signaling connection after completing a mobility registration update procedure.

(b) A service request message, used to activate the unavailability period of the terminal, where the service request message includes at least one of an unavailability period duration of the terminal and first indication information, and the first indication information is used to indicate that the terminal has no follow-on request.

Specifically, during running of T3346, when the target event associated with the terminal is to be triggered, the terminal initiates a service request procedure, and the service request message includes the unavailability period duration of the terminal for activating the unavailability period.

Further, the service request message further includes the first indication information for indicating that the terminal has no follow-on request, and the first indication information may be, for example, follow-on request indication information, which may be specifically represented as:

Follow-on request indicator to "No follow-on request pending" in the service request message. In other words, the follow-on request indication information in the service request message is set to "No follow-on request pending".

Optionally, the service request message does not include at least one of the following:
[1] an uplink data status IE; and
[2] an allowed PDU session status IE.

Optionally, in a case that the request message includes the service request message, the terminal can store the context information.

In other words, the terminal can store the 5G mobility management context information and the 5G session management context information.

Optionally, in a case that the terminal sends the service request message to the network-side device, the terminal stores the context information.

In other words, the terminal may store the 5G mobility management context information and the 5G session management context information into the USIM or the nonvolatile memory of the terminal. By performing the foregoing method, the terminal can reuse the context information after the unavailability period duration ends and can quickly resume the normal service based on the context information, thereby improving user experience.

Optionally, before the terminal sends the service request message to the network-side device, the network-side device needs to indicate support for the unavailability period to the terminal in a previous registration procedure.

Correspondingly, the terminal receives second indication information from the network-side device, where the second indication information is used to indicate that the network-side device supports the unavailability period.

In the foregoing implementation, the terminal sends, to the network-side device, the request message used to indicate that the terminal is to activate the unavailability period, so that the terminal can also synchronize the unavailability period duration with the network-side device in a case that the network-side device performs congestion control. This provides enough flexibility for the terminal and can avoid sending of signaling by the network-side device in the unavailability period duration of the terminal.

Optionally, the request message includes:
a deregistration request message, where the deregistration request message does not include an unavailability period duration of the terminal.

It may be understood that the terminal sends the deregistration request message to the network-side device, to indicate that the terminal is to activate the unavailability period, but the deregistration request message does not include the unavailability period duration of the terminal.

In an implementation, the terminal may send the deregistration request message to the network-side device in addition to the mobility registration update request message or the service request message, where the deregistration request message does not include the unavailability period duration of the terminal.

Specifically, during running of T3346, when the target event associated with the terminal is to be triggered, the terminal initiates a deregistration request procedure, used to activate the unavailability period, but the terminal does not include the unavailability period duration. By performing the foregoing method, the terminal does not need to synchronize the unavailability period duration with the network-side device, thereby reducing signaling overheads. In addition, the network-side device may determine a status of the terminal by using the deregistration request message, thereby avoiding unnecessary operations such as paging.

Optionally, in a case that the terminal sends the deregistration request message to the network-side device, the terminal cannot store the context information.

In other words, the terminal cannot store the 5G mobility management context information and the 5G session management context information.

Optionally, before the terminal sends the deregistration request message to the network-side device, the network-side device needs to indicate support for the unavailability period to the terminal in a previous registration procedure.

Correspondingly, the terminal receives second indication information from the network-side device, where the second indication information is used to indicate that the network-side device supports the unavailability period.

Optionally, in a case that the network-side device performs congestion control, when the target event associated with the terminal is to be triggered, a specific implementation process in which the terminal stores the context information is as follows:
During running of T3346, when the target event associated with the terminal is to be triggered, the terminal initiates local deregistration, and the terminal stores the context, to reuse the context after the unavailability period duration ends, so that the normal service can be quickly resumed.

Optionally, in a case that the terminal initiates local deregistration and stores the context information, the terminal can store the context information.

In other words, the terminal can store the 5G mobility management context information and the 5G session management context information. The terminal may store the 5G mobility management context information and the 5G session management context information into the USIM or the nonvolatile memory of the terminal. By performing the foregoing method, the terminal can reuse the context information after the unavailability period duration ends and can quickly resume the normal service based on the context information, thereby improving user experience.

Optionally, before the terminal initiates local deregistration and stores the context information, the network-side device needs to indicate support for the unavailability period to the terminal in a previous registration procedure.

Correspondingly, the terminal receives second indication information from the network-side device, where the second indication information is used to indicate that the network-side device supports the unavailability period.

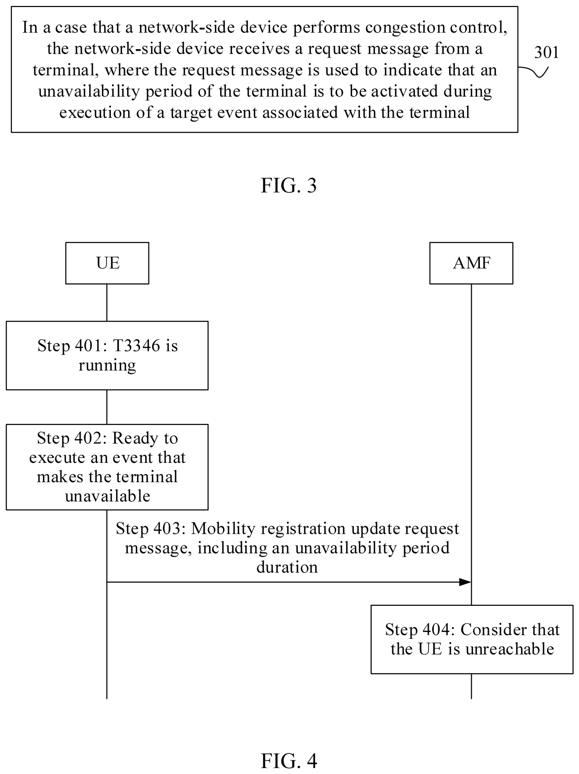

FIG. 3 is a second schematic flowchart of an information exchange method according to an embodiment of this application. As shown in FIG. 3, the method includes step 301.

Step 301: In a case that a network-side device performs congestion control, the network-side device receives a request message from a terminal, where the request message is used to indicate that an unavailability period of the terminal is to be activated during execution of a target event associated with the terminal.

It should be noted that this embodiment of this application can be applied to a scenario of NAS-level congestion control (that is, T3346 is running).

In this embodiment of this application, in the case that the network-side device performs congestion control, when the target event associated with the terminal is to be triggered, the network-side device needs to receive the request message from the terminal.

Optionally, the request message includes at least one of the following:
(a) A mobility registration update request message, where the mobility registration update request message includes an unavailability period duration of the terminal.
(b) A service request message, used to activate the unavailability period of the terminal, where the service request message includes at least one of an unavailability period duration of the terminal and first indication information, and the first indication information is used to indicate that the terminal has no follow-on request.

In this embodiment of this application, in the case that the network-side device performs congestion control, the network-side device receives the request message from the terminal, and determines that the unavailability period of the terminal is to be activated, so that the terminal can store context information in the unavailability period duration of the terminal. Therefore, the terminal can reuse the context information after the unavailability period duration ends, and can quickly resume a normal service based on the context information, thereby improving user experience.

Optionally, the request message includes:
a deregistration request message, where the deregistration request message does not include an unavailability period duration of the terminal.

It may be understood that the network-side device receives, from the terminal, the deregistration request message to indicate that the terminal is to activate the unavailability period, but the deregistration request message does not include the unavailability period duration of the terminal.

In an implementation, the network-side device receives the deregistration request message from the terminal in addition to the mobility registration update request message or the service request message from the terminal, where the deregistration request message is used to activate the unavailability period of the terminal, but the deregistration request message does not include the unavailability period duration of the terminal.

Optionally, the network-side device further needs to send second indication information to the terminal, where the second indication information is used to indicate that the network-side device supports the unavailability period.

Optionally, in a case that the request message includes at least one of the mobility registration update request message and the service request message, after the unavailability period duration of the terminal elapses or the terminal enters a connected state, the network-side device performs at least one of the following operations:
(a) storing the unavailability period duration of the terminal; and
(b) after completing a mobility registration update procedure and a service request procedure, releasing a non-access stratum NAS signaling connection.

The information exchange method provided in the embodiments of this application is further described with reference to FIG. 4 to FIG. 7.

FIG. 4 is a first schematic signaling interaction diagram of an information exchange method according to an embodiment of this application. FIG. 4 shows a scenario in which when T3346 is running, a terminal is not allowed to initiate a mobility registration update except when the terminal needs to activate an unavailability period. Specifically, the method includes step 401 to step 404.

Step 401: T3346 is running.

Specifically, the scenario in which T3346 is running includes at least one of the following:
Scenario 1: A mobility registration update request message sent by the terminal to a network-side device is rejected, where the mobility registration update request message is used to indicate that the terminal is to activate the unavailability period; and the terminal wants to activate the unavailability period again.
Scenario 2: A registration request message sent by the terminal to the network-side device is rejected, where the registration request is not used to indicate that the terminal is to activate the unavailability period. In this case, an upper layer of the terminal requests to activate the unavailability period.

Step 402: The UE is ready to execute an event that makes the terminal unavailable, that is, the event that makes the UE unavailable is to be triggered.

Step 403: During running of T3346, the UE is allowed to send a mobility registration update request message, where the mobility registration update request message is used to activate the unavailability period, that is, the UE sends, to an AMF, a mobility registration update request message including an unavailability period duration.

Before the mobility registration update request message is sent, the network-side device indicates support for the unavailability period duration in a previous registration procedure, and the terminal can store 5G mobility management and 5G session management contexts.

The terminal should include information indicating the unavailability period duration of the terminal into the registration request. For example, the information of the unavailability period duration of the terminal may be indicated by using an "unavailability period duration information element", and a follow-on request indication is set to "No follow-on request pending". In addition, even if the terminal has one or more active always-on PDU sessions related to 3GPP access, an uplink data status IE or an allowed PDU session status IE cannot be included in the registration request message.

Step 404: In a case that the UE provides the unavailability period duration, the AMF considers that the UE is unreachable.

Until the UE resumes a normal service or enters a connected state, the UE stores the received unavailability period and releases the NAS signaling connection after completion of the mobility registration update procedure.

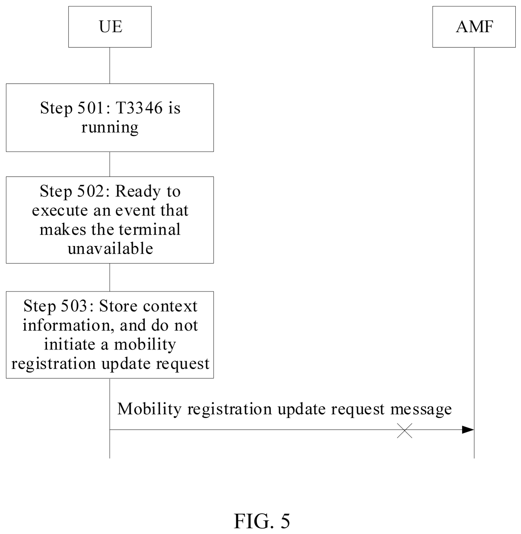

FIG. 5 is a second schematic signaling interaction diagram of an information exchange method according to an embodiment of this application. FIG. 5 shows a scenario in which UE only stores context information and does not initiate a mobility registration update procedure to activate an unavailability period. Specifically, the method includes step 501 to step 503.

Step 501: T3346 is running. Specifically, the scenario in which T3346 is running includes at least one of the following:
Scenario 1: A mobility registration update request message sent by the terminal to a network-side device is rejected, where the mobility registration update request message is used to indicate that the terminal is to activate the unavailability period; and the terminal wants to activate the unavailability period again.
Scenario 2: A registration request message sent by the terminal to the network-side device is rejected, where the registration request is not used to indicate that the terminal is to activate the unavailability period. In this case, an upper layer of the terminal requests to activate the unavailability period.

Step 502: The UE is ready to execute an event that makes the terminal unavailable, that is, the event that makes the UE unavailable is to be triggered.

Step 503: The UE stores the context information, initiates local deregistration, and does not initiate a mobility registration update request, that is, does not send a mobility registration update request message to an AMF.

Specifically, by storing the context information, the UE can reuse a context after an unavailability period duration ends, and can quickly resume a normal service.

The context information includes mobility management context information and session management context information, where the context information is stored in a USIM or a nonvolatile memory.

Before the UE stores the context information, a network needs to indicate support for the unavailability period duration in a previous registration procedure, and the UE can store the 5G mobility management context information and the 5G session management context information.

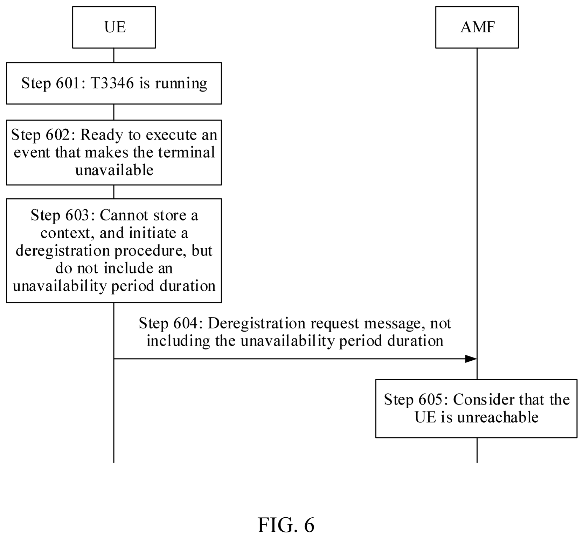

FIG. 6 is a third schematic signaling interaction diagram of an information exchange method according to an embodiment of this application. FIG. 6 shows a scenario in which when T3346 is running and UE cannot store a context, the UE initiates a deregistration procedure to interact with a network but an unavailability period duration is not included. Specifically, the method includes step 601 to step 605.

Step 601: T3346 is running.

Specifically, the scenario in which T3346 is running includes at least one of the following:
Scenario 1: A mobility registration update request message sent by the terminal to a network-side device is rejected, where the mobility registration update request message is used to indicate that the terminal is to activate an unavailability period; and the terminal wants to activate the unavailability period again.
Scenario 2: A registration request message sent by the terminal to the network-side device is rejected, where the registration request is not used to indicate that the terminal is to activate an unavailability period. In this case, an upper layer of the terminal requests to activate the unavailability period.

Step 602: The UE is ready to execute an event that makes the terminal unavailable, that is, the event that makes the UE unavailable is to be triggered.

Step 603: The UE cannot store a context, and initiates a deregistration procedure, but does not include the unavailability period duration.

Step 604: The UE sends a deregistration request message to an AMF, where the message does not include the unavailability period duration.

Step 605: The AMF considers that the UE is unreachable.

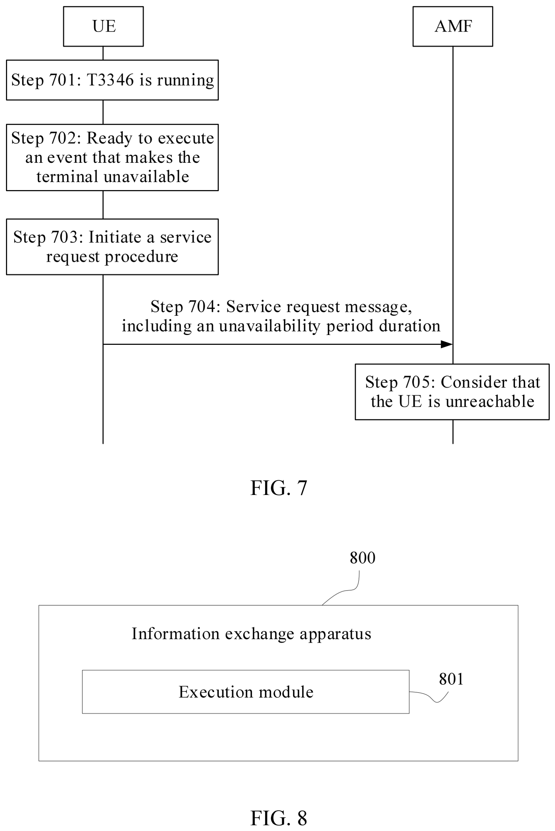

FIG. 7 is a fourth schematic signaling interaction diagram of an information exchange method according to an embodiment of this application. FIG. 7 shows a scenario in which when T3346 is running, UE initiates a service request procedure to activate an unavailability period. Specifically, the method includes step 701 to step 705.

Step 701: T3346 is running.

Specifically, the scenario in which T3346 is running includes at least one of the following:
Scenario 1: A mobility registration update request message sent by the terminal to a network-side device is rejected, where the mobility registration update request message is used to indicate that the terminal is to activate the unavailability period; and the terminal wants to activate the unavailability period again.
Scenario 2: A registration request message sent by the terminal to the network-side device is rejected, where the registration request is not used to indicate that the terminal is to activate the unavailability period. In this case, an upper layer of the terminal requests to activate the unavailability period.

Step 702: The UE is ready to execute an event that makes the terminal unavailable, that is, the event that makes the UE unavailable is to be triggered.

Step 703: The UE initiates the service request procedure.

Step 704: The UE sends a service request message to an AMF, where the service request message includes an unavailability period duration for activating the unavailability period.

Further, the terminal does not include at least one of the following into the service request message:
(a) UE context information;
(b) an uplink data status IE (Uplink data status IE); and
(c) an allowed PDU session status IE (the Allowed PDU session status IE).

In addition, Follow-on request indicator in the service request message is set to "No follow-on request pending".

It should be noted that the terminal is capable of including context information, where the context information includes mobility management context information and session management context information, and the context information is stored in a USIM or a nonvolatile memory.

Before the UE stores a context, a network needs to indicate support for the unavailability period duration in a previous registration procedure, and the terminal can store the 5G mobility management context information and the 5G session management context information.

Step 705: The AMF considers that the UE is unreachable.

The information exchange method provided in the embodiments of this application may be performed by an information exchange apparatus. An information exchange apparatus provided in the embodiments of this application is described by assuming that the information exchange method in the embodiments of this application is performed by the information exchange apparatus.

FIG. 8 is a first schematic diagram of a structure of an information exchange apparatus according to an embodiment of this application. As shown in FIG. 8, the information exchange apparatus 800 includes:
an execution module 801, configured to perform at least one of the following operations when a target event associated with a terminal is to be triggered in a case that a first timer is running:
sending a request message to a network-side device, where the request message is used to indicate that the terminal is to activate an unavailability period; and
storing context information, where
the terminal is unavailable during execution of the target event, and the first timer is a timer related to congestion control.

According to the information exchange apparatus provided in this embodiment of this application, in the case that the first timer related to congestion control is running, when the target event associated with the terminal is to be triggered, the terminal sends, to the network-side device, the request message used to indicate that the terminal is to activate the unavailability period, so that the terminal can successfully activate the unavailability period and that the terminal can store the context information in an unavailability period duration. Alternatively, in a case that the network-side device performs congestion control, when the target event associated with the terminal is to be triggered, the terminal directly stores the context information, so that the terminal can reuse the context information after an unavailability period duration ends and can quickly resume a normal service based on the context information, thereby improving user experience.

Optionally, the request message includes at least one of the following:
a mobility registration update request message, where the mobility registration update request message includes an unavailability period duration of the terminal; and
a service request message, used to activate the unavailability period of the terminal, where the service request message includes at least one of an unavailability period duration of the terminal and first indication information, and the first indication information is used to indicate that the terminal has no follow-on request.

Optionally, the terminal can store the context information.

Optionally, the apparatus further includes:
a first storage module, configured to store the context information.

Optionally, the request message includes:
a deregistration request message, where the deregistration request message does not include an unavailability period duration of the terminal.

Optionally, in a case that the request message includes the deregistration request message, the terminal cannot store the context information.

Optionally, the apparatus further includes:
a second receiving module, configured to receive second indication information from the network-side device, where the second indication information is used to indicate that the network-side device supports the unavailability period.

Optionally, a storage location of the context information includes at least one of the following:
a universal subscriber identity module USIM of the terminal; and
a nonvolatile memory of the terminal.

Optionally, the context information includes at least one of the following:
fifth generation mobile communication technology 5G mobility management context information; and
5G session management context information.

Optionally, the first timer includes a timer T3346.

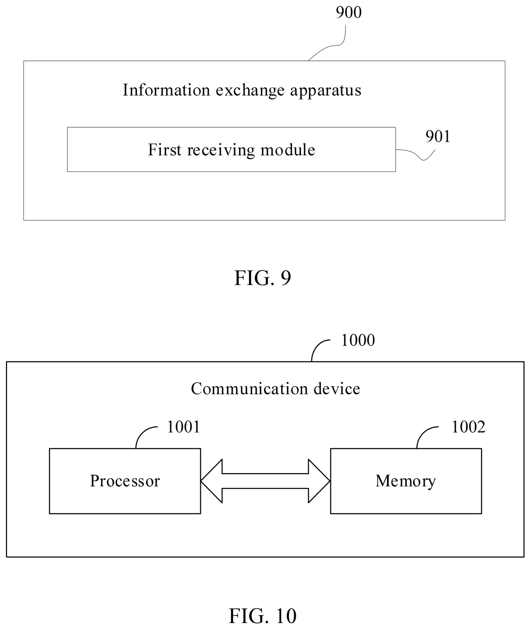

FIG. 9 is a second schematic diagram of a structure of an information exchange apparatus according to an embodiment of this application. As shown in FIG. 9, the information exchange apparatus 900 includes:
a first receiving module 901, configured to receive a request message from a terminal in a case that a network-side device performs congestion control, where
the request message is used to indicate that an unavailability period of the terminal is to be activated during execution of a target event associated with the terminal.

According to the information exchange apparatus provided in this embodiment of this application, in the case that the network-side device performs congestion control, the network-side device receives the request message from the terminal, and determines that the unavailability period of the terminal is to be activated, so that the terminal can store context information in an unavailability period duration. Therefore, the terminal can reuse the context information after the unavailability period duration ends, and can quickly resume a normal service based on the context information, thereby improving user experience.

Optionally, the request message includes at least one of the following:
a mobility registration update request message, where the mobility registration update request message includes an unavailability period duration of the terminal; and
a service request message, used to activate the unavailability period of the terminal, where the service request message includes at least one of an unavailability period duration of the terminal and first indication information, and the first indication information is used to indicate that the terminal has no follow-on request.

Optionally, the request message includes:
a deregistration request message, where the deregistration request message does not include an unavailability period duration of the terminal.

Optionally, the apparatus further includes:
a sending module, configured to send second indication information to the terminal, where the second indication information is used to indicate that the network-side device supports the unavailability period.

Optionally, the apparatus further includes at least one of the following:
a second storage module, configured to store the unavailability period duration of the terminal; and
a release module, configured to release a non-access stratum NAS signaling connection after a mobility registration update procedure and a service request procedure are completed.

The information exchange apparatus in this embodiment of this application may be an electronic device, for example, an electronic device with an operating system, or may be a component in an electronic device, for example, an integrated circuit or a chip. The electronic device may be a terminal, or may be other devices than a terminal. For example, the terminal may include but is not limited to the foregoing illustrated type of the terminal 11. The other devices may be a server, a network attached storage (Network Attached Storage, NAS), and the like. This is not specifically limited in this embodiment of this application.

The information exchange apparatus provided in this embodiment of this application can implement each process implemented in the method embodiments in FIG. 2 and FIG. 3, with the same technical effect achieved. To avoid repetition, details are not described herein again.

FIG. 10 is a schematic diagram of a structure of a communication device according to an embodiment of this application. The communication device 1000 provided in this embodiment of this application includes a processor 1001 and a memory 1002. The memory 1002 stores a program or instructions capable of running on the processor 1001. For example, when the communication device 1000 is a terminal, and the program or instructions are executed by the processor 1001, the steps of the foregoing method embodiment shown in FIG. 2 are implemented, with the same technical effect achieved. When the communication device 1000 is a network-side device, and the program or instructions are executed by the processor 1001, the steps of the foregoing method embodiment shown in FIG. 3 are implemented, with the same technical effect achieved. To avoid repetition, details are not described herein again.

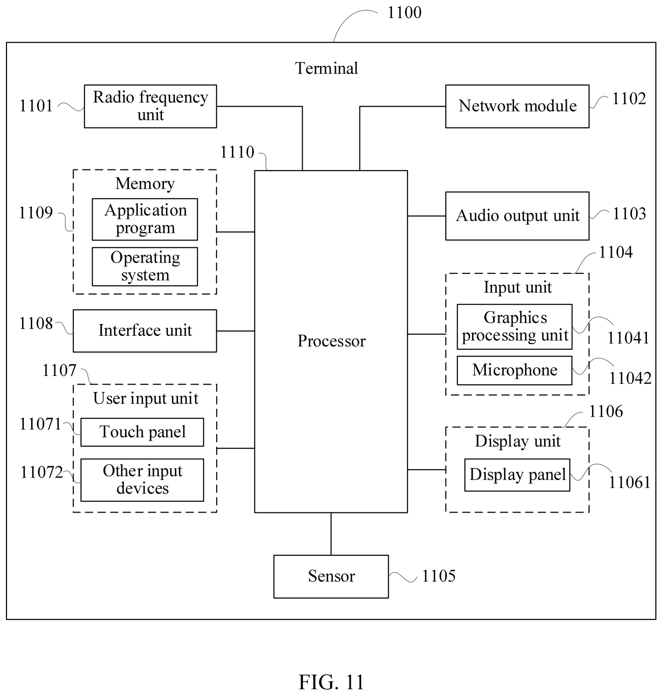

An embodiment of this application further provides a terminal, including a processor and a communication interface. The communication interface is coupled to the processor. The processor is configured to run a program or instructions to implement the steps in the method embodiment shown in FIG. 2. The terminal embodiment corresponds to the foregoing terminal-side method embodiment, and each implementation process and implementation of the foregoing method embodiment can be applied to the terminal embodiment, with the same technical effect achieved. Specifically, FIG. 11 is a schematic diagram of a hardware structure of a terminal according to an embodiment of this application.

The terminal 1100 includes but is not limited to at least some components such as a radio frequency unit 1101, a network module 1102, an audio output unit 1103, an input unit 1104, a sensor 1105, a display unit 1106, a user input unit 1107, an interface unit 1108, a memory 1109, and a processor 1110.

A person skilled in the art may understand that the terminal 1100 may further include a power supply (for example, a battery) supplying power to all components. The power supply may be logically connected to the processor 1110 through a power management system. In this way, functions such as charge management, discharge management, and power consumption management are implemented by using the power management system. The terminal structure shown in FIG. 11 does not constitute a limitation on the terminal. The terminal may include more or fewer components than those shown in the figure, or some components are combined, or component arrangements are different. Details are not described herein again.

It should be understood that, in this embodiment of this application, the input unit 1104 may include a graphics processing unit (Graphics Processing Unit, GPU) 11041 and a microphone 11042. The graphics processing unit 11041 processes image data of a still picture or video obtained by an image capture apparatus (such as a camera) in a video capture mode or an image capture mode. The display unit 1106 may include a display panel 11061, and the display panel 11061 may be configured in a form of a liquid crystal display, an organic light-emitting diode, or the like. The user input unit 1107 includes at least one of a touch panel 11071 and other input devices 11072. The touch panel 11071 is also referred to as a touchscreen. The touch panel 11071 may include two parts: a touch detection apparatus and a touch controller. The other input devices 11072 may include but are not limited to a physical keyboard, a function button (such as a volume control button or a power button), a trackball, a mouse, and a joystick. Details are not described herein again.

In this embodiment of this application, after receiving downlink data from a network-side device, the radio frequency unit 1101 may transmit the downlink data to the processor 1110 for processing. In addition, the radio frequency unit 1101 may send uplink data to the network-side device. Usually, the radio frequency unit 1101 includes but is not limited to an antenna, an amplifier, a transceiver, a coupler, a low noise amplifier, a duplexer, and the like.

The memory 1109 may be configured to store software programs or instructions and various data. The memory 1109 may primarily include a first storage area for storing programs or instructions and a second storage area for storing data. The first storage area may store an operating system, an application program or instructions required by at least one function (such as an audio play function and an image play function), and the like. In addition, the memory x09 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data rate SDRAM, DDR SDRAM), an enhanced synchronous dynamic random access memory (Enhanced SDRAM, ESDRAM), a synchlink dynamic random access memory (Synch link DRAM, SLDRAM), and a direct rambus random access memory (Direct Rambus RAM, DRRAM). The memory 1109 in this embodiment of this application includes but is not limited to these and any other suitable types of memories.

The processor 1110 may include one or more processing units. Optionally, the processor 1110 integrates an application processor and a modem processor. The application processor mainly processes operations related to the operating system, a user interface, an application program, and the like. The modem processor mainly processes a wireless communication signal. For example, the modem processor is a baseband processor. It may be understood that the modem processor may alternatively not be integrated in the processor 1110.

An embodiment of this application further provides a network-side device, including a processor and a communication interface. The communication interface is coupled to the processor. The processor is configured to run a program or instructions to implement the steps in the method embodiment shown in FIG. 3. The network-side device embodiment corresponds to the foregoing method embodiment on the network-side device, and each implementation process and implementation of the foregoing method embodiment can be applied to the network-side device embodiment, with the same technical effect achieved.

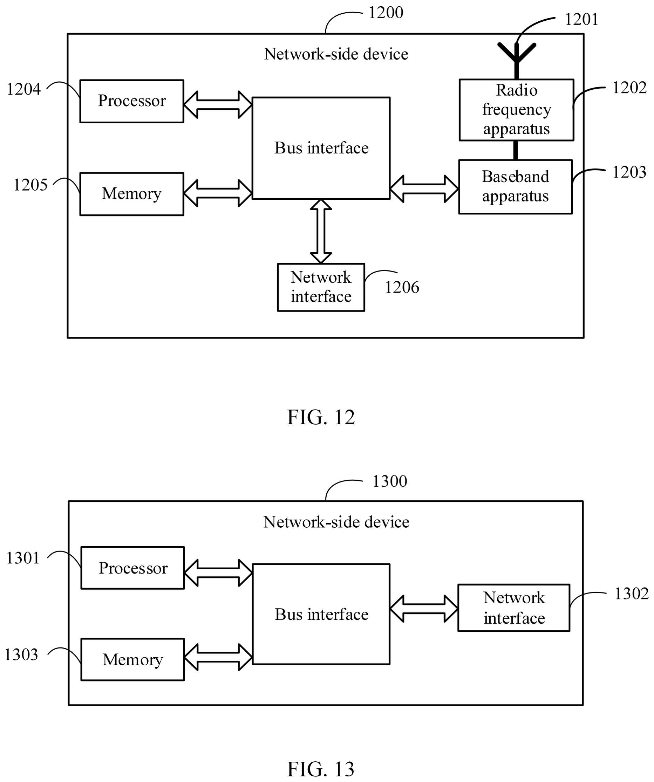

Specifically, an embodiment of this application further provides a network-side device. FIG. 12 is a first schematic diagram of a structure of a network-side device according to an embodiment of this application. As shown in FIG. 12, the network-side device 1200 includes an antenna 121, a radio frequency apparatus 122, a baseband apparatus 123, a processor 124, and a memory 125. The antenna 121 is connected to the radio frequency apparatus 122. In an uplink direction, the radio frequency apparatus 122 receives information by using the antenna 121, and sends the received information to the baseband apparatus 123 for processing. In a downlink direction, the baseband apparatus 123 processes to-be-sent information, and sends the information to the radio frequency apparatus 122; and the radio frequency apparatus 122 processes the received information and then sends the information out by using the antenna 121.

The method performed by the network-side device in the foregoing embodiment may be implemented in the baseband apparatus 123. The baseband apparatus 123 includes a baseband processor.

The baseband apparatus 123 may include, for example, at least one baseband unit, where a plurality of chips are disposed on the baseband unit. As shown in FIG. 12, one of the chips is, for example, the baseband processor, connected to the memory 125 by using a bus interface, to invoke a program in the memory 125 to perform the operation of the network device shown in the foregoing method embodiment.

The network-side device may further include a network interface 126, where the interface is, for example, a common public radio interface (Common Public Radio Interface, CPRI).

Specifically, the network-side device 1200 in this embodiment of this application further includes a program or instructions stored in the memory 125 and capable of running on the processor 124. When the processor 124 invokes the program or instructions in the memory 125, the method performed by each module shown in FIG. 3 is performed, with the same technical effect achieved. To avoid repetition, details are not described herein again.

Specifically, an embodiment of this application further provides a network-side device. FIG. 13 is a second schematic diagram of a structure of a network-side device according to an embodiment of this application. As shown in FIG. 13, the network-side device 1300 includes a processor 1301, a network interface 1302, and a memory 1303. The network interface 1302 is, for example, a common public radio interface (common public radio interface, CPRI).

Specifically, the network-side device 1300 in this embodiment of this application further includes a program or instructions stored in the memory 1303 and capable of running on the processor 1301. When the processor 1301 invokes the program or instructions in the memory 1303, the method performed by each module shown in FIG. 3 is performed, with the same technical effect achieved. To avoid repetition, details are not described herein again.

An embodiment of this application further provides a readable storage medium. The readable storage medium stores a program or instructions. When the program or instructions are executed by a processor, each process of the foregoing information exchange method embodiment is implemented, with the same technical effect achieved. To avoid repetition, details are not described herein again.

The processor is a processor in the terminal in the foregoing embodiment. The readable storage medium includes a computer-readable storage medium, such as a computer read-only memory ROM, a random access memory RAM, a magnetic disk, or an optical disc. In some examples, the readable storage medium may be a non-transitory readable storage medium.

In addition, an embodiment of this application provides a chip. The chip includes a processor and a communication interface. The communication interface is coupled to the processor. The processor is configured to run a program or instructions to implement each process of the foregoing information exchange method embodiment, with the same technical effect achieved. To avoid repetition, details are not described herein again.

It should be understood that the chip provided in this embodiment of this application may also be referred to as a system-level chip, a system chip, a chip system, a system-on-chip, or the like.

In addition, an embodiment of this application provides a computer program or program product. The computer program or program product is stored in a storage medium. The computer program or program product is executed by at least one processor to implement each process of the foregoing information exchange method embodiment, with the same technical effect achieved. To avoid repetition, details are not described herein again.

An embodiment of this application further provides an information exchange system, including a terminal and a network-side device. The terminal may be configured to perform the steps of the foregoing information exchange method shown in FIG. 2. The network-side device may be configured to perform the steps of the foregoing information exchange method shown in FIG. 3.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

Based on the foregoing descriptions of the implementations, a person skilled in the art may clearly understand that the foregoing embodiment methods can be implemented by using a computer software product in combination with a necessary general hardware platform, or by using hardware only. The computer software product is stored in a storage medium (such as a ROM, a RAM, a magnetic disk, or an optical disc), and includes several instructions for instructing a terminal or a network-side device to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners of embodiments without departing from principles of this application and the protection scope of the claims, and all such manners of embodiments fall within the protection scope of this application.

## Claims

1. An information exchange method, comprising:
in a case that a first timer is running, when a target event associated with a terminal is to be triggered, performing, by the terminal, at least one of the following operations:
sending a request message to a network-side device, wherein the request message is used to indicate that the terminal is to activate an unavailability period; and
storing context information, wherein
the terminal is unavailable during execution of the target event, and the first timer is a timer related to congestion control.

2. The information exchange method according to claim 1, wherein the request message comprises at least one of the following:
a mobility registration update request message, wherein the mobility registration update request message comprises an unavailability period duration of the terminal; and
a service request message, wherein the service request message comprises at least one of an unavailability period duration of the terminal and first indication information, and the first indication information is used to indicate that the terminal has no follow-on request.

3. The information exchange method according to claim 1 or 2, wherein the terminal can store the context information.

4. The information exchange method according to any one of claims 1 to 3, wherein the method further comprises:
storing, by the terminal, the context information.

5. The information exchange method according to claim 1, wherein the request message comprises:
a deregistration request message, wherein the deregistration request message does not comprise an unavailability period duration of the terminal.

6. The information exchange method according to claim 5, wherein in a case that the request message comprises the deregistration request message, the terminal cannot store the context information.

7. The information exchange method according to any one of claims 1 to 6, wherein the method further comprises:
receiving, by the terminal, second indication information from the network-side device, wherein the second indication information is used to indicate that the network-side device supports the unavailability period.

8. The information exchange method according to any one of claims 1 to 7, wherein a storage location of the context information comprises at least one of the following:
a universal subscriber identity module USIM of the terminal; and
a non-volatile memory of the terminal.

9. The information exchange method according to any one of claims 1 to 8, wherein the context information comprises at least one of the following:
fifth generation mobile communication technology 5G mobility management context information; and
5G session management context information.

10. The information exchange method according to any one of claims 1 to 9, wherein the first timer comprises a timer T3346.

11. An information exchange method, comprising:
in a case that a network-side device performs congestion control, receiving, by the network-side device, a request message from a terminal, wherein
the request message is used to indicate that an unavailability period of the terminal is to be activated during execution of a target event associated with the terminal.

12. The information exchange method according to claim 11, wherein the request message comprises at least one of the following:
a mobility registration update request message, wherein the mobility registration update request message comprises an unavailability period duration of the terminal; and
a service request message, wherein the service request message comprises at least one of an unavailability period duration of the terminal and first indication information, and the first indication information is used to indicate that the terminal has no follow-on request.

13. The information exchange method according to claim 11, wherein the request message comprises:
a deregistration request message, wherein the deregistration request message does not comprise an unavailability period duration of the terminal.

14. The information exchange method according to any one of claims 11 to 13, wherein the method further comprises:
sending, by the network-side device, second indication information to the terminal, wherein the second indication information is used to indicate that the network-side device supports the unavailability period.

15. The information exchange method according to claim 12, wherein, in a case that the terminal sends the request message to the network-side device, after the unavailability period duration of the terminal elapses or the terminal enters a connected state, the network-side device performs at least one of the following operations:
storing the unavailability period duration of the terminal; and
after completing a mobility registration update procedure and a service request procedure, releasing a non-access stratum NAS signaling connection.

16. An information exchange apparatus, comprising:
an execution module, configured to perform at least one of the following operations when a target event associated with a terminal is to be triggered in a case that a first timer is running:
sending a request message to a network-side device, wherein the request message is used to indicate that the terminal is to activate an unavailability period; and
storing context information, wherein
the terminal is unavailable during execution of the target event, and the first timer is a timer related to congestion control.

17. An information exchange apparatus, comprising:
a first receiving module, configured to receive a request message from a terminal in a case that a network-side device performs congestion control, wherein
the request message is used to indicate that an unavailability period of the terminal is to be activated during execution of a target event associated with the terminal.

18. A terminal, comprising a processor and a memory, wherein the memory stores a program or instructions capable of running on the processor, and when the program or instructions are executed by the processor, the steps of the information exchange method according to any one of claims 1 to 10 are implemented.

19. A network-side device, comprising a processor and a memory, wherein the memory stores a program or instructions capable of running on the processor, and when the program or instructions are executed by the processor, the steps of the information exchange method according to any one of claims 11 to 15 are implemented.

20. A readable storage medium, wherein the readable storage medium stores a program or instructions, and when the program or instructions are executed by a processor, the information exchange method according to any one of claims 1 to 10 is implemented, or the steps of the information exchange method according to any one of claims 11 to 15 are implemented.
